# EUROPEAN PATENT APPLICATION

(11) **EP 4 094 810 A1**
(43) Date of publication of application: **30.11.2022**
(21) Application number: 21744916.4
(22) Date of filing: 21.01.2021
(51) Int. Cl.: A62C 3/00, A62C 8/06, A62D 1/06, C08K 5/56, C08L 29/04, C08L 101/00, C08K 3/08, C08K 3/18

(54) **FIRE EXTINGUISHING SHEET**

(30) Priority: 22.01.2020 JP 2020008038; 31.01.2020 JP 2020014784
(71) Applicant: Yamato Protec Corporation, Tokyo 108-0071 (JP)
(72) Inventor: TOMIYAMA, Shogo, Inashiki-gun, Ibaraki 300-1312 (JP); TSUTSUMI, Akimasa, Inashiki-gun, Ibaraki 274-0052 (JP)
(74) Representative: ABG Intellectual Property Law, S.L.
(86) International application number: PCT/JP2021/002015
(87) International publication number: WO 2021/149758

(57) **Abstract**

The present invention discloses a fire extinguishing sheet which is used in places, facilities, devices, tools, structures and the like where a fire may break out, and which makes initial fire extinguishing possible. This fire extinguishing sheet contains at least a potassium compound as a fire extinguishing chemical that is thermally decomposed upon reaching a predetermined temperature and generates a fire extinguishing component; and this fire extinguishing sheet is arranged in places, facilities, devices, tools, structures and the like where a fire may break out. If a fire breaks out, aerosols containing potassium radicals (a potassium compound) are generated from the fire extinguishing sheet, and the chain of combustion is interrupted by a negative catalytic effect, thereby quickly extinguishing or suppressing the fire.

## Description

### [Technical Field]

The present invention relates to a fire-extinguishing sheet that can extinguish a fire in an early stage, and that is used for places, facilities, devices, tools, structures and the like where a fire may break out.

### [Background Art]

A fire-extinguishing composition to extinguish or suppress a fire by generating an aerosol by burning has been known (for example, PLT 1). The fire-extinguishing composition can be used as a liquid for a dispersion body, or as a solid such as a powder or a formed article having an intended shape.

### [Citation List]

### [Patent Literature]

PLT 1: WO2017/134703

### [Summary of Invention]

### [Technical Problem]

In the formed article described in PLT 1, which is so called a self-distinguishing formed article, there has still been a room for improvement.

It is therefore an object of the present invention to provide a fire-extinguishing sheet that can extinguish a fire in an early stage, and that is used for places, facilities, devices, tools, structures and the like where a fire may break out.

### [Solution to Problem]

According to the present invention, there is provided a fire-extinguishing sheet comprising a fire-extinguishing agent capable of generating a fire-extinguishing component by thermal decomposition upon reaching a prescribed temperature.

According to a preferred embodiment of the present invention, the fire-extinguishing component is an aerosol.

According to one preferred embodiment of the present invention, the fire-extinguishing agent includes at least a potassium compound and a binding agent.

According to a preferred embodiment of the present invention, the potassium compound comprises at least a potassium-containing organic compound and potassium chlorate.

According to an embodiment of the present invention, the binding agent is preferably one, or two or more selected from the group consisting of a polyester resin, polystyrene, a polyolefin resin, a polyurethane resin, polyisocyanate, a polyimide resin, an acrylic resin, a cellulose compound, vinyl chloride, an ethylene-vinyl acetate copolymer, a polyvinylidene fluoride resin, a fluorine resin binder, a synthetic latex, a rosin, an epoxy resin, a phenol resin, a polyvinyl alcohol resin, a polyvinyl acetal resin, an olefinic thermoplastic resin, a butadiene thermoplastic resin, a styrene thermoplastic resin, a styrene-butadiene thermoplastic resin, an isoprene thermoplastic resin, a urethane thermoplastic resin, an ester thermoplastic resin, an amide thermoplastic resin, a vinyl chloride thermoplastic resin, a thermoplastic resin formed of a mixture of a process oil, a tackifier resin, and the like, an alloy type thermoplastic elastomer, a dynamic crosslinkable thermoplastic elastomer, bentonite, and biobinder biopoly B.

Also, according to a preferred embodiment of the present invention, the fire-extinguishing sheet comprises at least tripotassium citrate and potassium chlorate as the potassium compound and at least polyvinyl butyral as the binding agent.

According to another embodiment of the present invention, there is provided a fire-extinguishing sheet for use with a lithium ion battery, which comprises the fire-extinguishing sheet according to the present invention and which is used in contact with or adjacent to the lithium ion battery.

According to still another embodiment of the present invention, there is provided use of the fire-extinguishing sheet according to the present invention for extinguishing or suppressing a fire of a lithium ion battery.

Also, according to another embodiment of the present invention, there is provided a method for extinguishing or suppressing a fire of a lithium ion battery, comprising putting the fire-extinguishing sheet according to the present invention in contact with or adjacent to the lithium ion battery.

### [Advantages]

According to the present invention, there is provided a fire-extinguishing sheet that can extinguish a fire in an early stage, and that is used for places, facilities, devices, tools, structures and the like where a fire may break out. The fire-extinguishing sheet is excellent in productivity, mass productivity, and mass production.

### [Description of Embodiment]

Hereinafter, the fire-extinguishing sheets according to representative embodiments of the present invention will be explained in detail.

The fire-extinguishing sheet according to the present invention includes a fire-extinguishing agent which is capable of generating a fire-extinguishing component by thermal decomposition upon reaching a prescribed temperature. According to one embodiment of the present invention, the fire-extinguishing sheet is the fire-extinguishing agent that is formed in a sheet-like shape. The fire-extinguishing sheet generates an aerosol as the fire-extinguishing component. The fire-extinguishing sheet includes at least a potassium compound and a binding agent in the fire-extinguishing agent.

According to one embodiment of the present invention, the fire-extinguishing agent includes, for example, 0.5% to 30% by mass of a binding agent (component A) and 10% to 70% by mass of a chlorate salt (component B), and further 30 to 900 parts by mass of a potassium salt (component C), relative to 100 parts by mass of the binding agent and the chlorate salt; and in addition, the thermal decomposition temperature of the fire-extinguishing agent is in the range of 90°C or higher to 450°C.

Examples of component A, i.e., the binding agent, preferably include a polyester resin, polystyrene, a polyolefin resin, a polyurethane resin, polyisocyanate, a polyimide resin, an acrylic resin, a cellulose compound, vinyl chloride, an ethylene-vinyl acetate copolymer, a polyvinylidene fluoride resin, a fluorine resin binder, a synthetic latex, a rosin, an epoxy resin, a phenol resin, a polyvinyl alcohol resin, a polyvinyl acetal resin, an olefinic thermoplastic resin, a butadiene thermoplastic resin, a styrene thermoplastic resin, a styrene-butadiene thermoplastic resin, an isoprene thermoplastic resin, a urethane thermoplastic resin, an ester thermoplastic resin, an amide thermoplastic resin, a vinyl chloride thermoplastic resin, a thermoplastic resin formed of a mixture of a process oil, a tackifier resin, and the like, an alloy type thermoplastic elastomer, a dynamic crosslinkable thermoplastic elastomer, bentonite, and biobinder biopoly B, as well as a mixture of two or more of them.

Component B, i.e., the chlorate salt, is a strong oxidant, and is the component that generates a thermal energy by burning with component C, i.e., the potassium salt, which in turn generates an aerosol (potassium radical). This aerosol releases a potassium radical (potassium compound) that is the fire-extinguishing component, which breaks up burning chains due to a negative catalytic effect thereof so that the fire can be extinguished quickly.

The contents of component A (binding agent) and of component B (chlorate salt) in 100% by mass of the total of them are as follows:
Component A: 0.5% to 30% by mass,
   preferably 1% to 20% by mass,
   more preferably 3% to 10% by mass; and
Component B: 70% to 99.5% by mass,
   preferably 80% to 99% by mass, and
   more preferably 90% to 97% by mass.

Component C, i.e., the potassium salt, is the component to generate the aerosol (potassium radical) by a thermal energy generated by burning of component B.

Examples of component C, i.e., the potassium salt, preferably include potassium acetate, potassium propionate, monopotassium citrate, dipotassium citrate, tripotassium citrate, monopotassium trihydrogen ethylenediaminetetraacetate, dipotassium diihydrogen ethylenediaminetetraacetate, tripotassium monohydrogen ethylenediaminetetraacetate, tetrapotassium ethylenediaminetetraacetate, potassium hydrogen phthalate, dipotassium phthalate, potassium hydrogen oxalate, dipotassium oxalate, potassium hydrogen carbonate, and potassium bicarbonate, as well as a mixture of two or more of them.

The content of component C is preferably 50 to 500 parts by mass, while more preferably 100 to 300 parts by mass, relative to 100 parts by mass of component A and component B.

In the present invention, the fire-extinguishing agent starts the thermal decomposition in the temperature range of 90°C or higher to 450°C, while preferably in the range of 150°C to 260°C. This temperature range to start the thermal decomposition can be obtained by combining component A, component B, and component C with the ratios above.

The fire-extinguishing sheet according to the present invention is obtained by forming the fire-extinguishing agent in a formed article such as a sheet. For example, the components of the fire-extinguishing agent are mixed; then, the resulting mixture is formed to a sheet-like shape with controlling the coating condition, followed by drying as needed. The size, such as the thickness and the area, of the fire-extinguishing sheet according to the present invention is determined as appropriate in accordance with an object for fire-extinguishing such as a facility, an instrument, a machine, a tool, and a construction structure, and with the use thereof, among other things. A laminate of a plurality of the sheet-like fire-extinguishing agents can also be used.

The fire-extinguishing sheet according to the present invention is used by disposing in the place where the object of fire-extinguishment such as a facility, an instrument, a machine, a tool, and a construction structure can possibly cause a fire. For example, in the case of the instrument and the tool, the fire-extinguishing sheet is disposed in contact with or adjacent to a battery cell including a secondary battery such as a lithium ion battery that can cause a fire by some trouble such as an unexpected accident, as well as a member that can cause a fire such as a housing, an electrode, a communication terminal, and a circuit board of the battery. The fire-extinguishing sheet may be disposed in a plurality of the places.

The fire-extinguishing sheet according to the present invention can be sealed inside of an object such as a facility, an instrument, a machine, a tool, and a construction structure in order to expresses the fire-extinguishing action by means of the aerosol as mentioned above. Also, it can be sealed together with the member that can possibly cause a fire, as described above.

### [Examples]

The present invention will be explained more specifically with Examples and Comparative Example. In these Examples and Comparative Example, the fire-extinguishing sheets were prepared in the way as described following (1).

### (1) Preparation of fire-extinguishing sheet

### (1-1) Preparation of binding agent

Polyvinyl butyral as a binding agent was dissolved into N-methylpyrrolidone, as a solvent, to obtain a 18% by mass solution of polyvinyl butyral.

### (1-2) Preparation of fire-extinguishing agent slurry by powder crushing

Tripotassium citrate (187.5 g), 112.5 g of potassium chlorate, and 200 g of N-methylpyrrolidone, as well as 2 kg of alumina balls having the grain diameter of 5 mm as the dispersion media, were charged into a 2-liters container; then, they were stirred and crushed by means of a ball mill at 60 rpm for about 24 hours to obtain a fire-extinguishing agent slurry.

### (1-3) Preparing coating material (addition of the binding agent into the fire-extinguishing agent slurry)

To the entire of the fire-extinguishing agent slurry obtained in (1-2), 111 g of the polyvinyl butyral solution with the concentration of 18% by mass obtained in (1-1) was added. The resulting mixture was further mixed using the ball mill at 60 rpm for about 24 hours to obtain a coating material in a paste-like form (mayonnaise-like) having a thixotropic property. The viscosity of the resulting coating material was confirmed to be in the range of 2000 to 3000 mPa·S using B-type viscometer with load (torque) of 50%.

### (1-4) Separation (removal of dispersion media)

By using an appropriate metal strainer made of a stainless steel, the coating material obtained in (1-3) and the dispersion media are separated. It was confirmed that yield was in the range of 50 to 60%.

### (1-5) Filtration (separation of coarse agent and foreign matters)

The coating material obtained in the separation process in (1-4) was filtrated using a 100-mesh stainless steel sieve (opening of about 200 µm) to remove coarse particles and foreign matters.

### (1-6) Coating (sheeting of the coating material)

A PET film having the thickness of 100 µm, having been treated with a silicon (Si) or fluorine (F) release film, was placed on the table of "β-coater", manufactured by Yasui Seiki Inc.; then, on it was applied the fire-extinguishing agent slurry. A round type applicator having a gap of 400 µm was used for application. Application onto the PET sheet was carried out with the application speed of about 0.5 mm/min.

### (1-7) Drying process (removal of solvent)

By using a general circulation type constant temperature oven, the solvent was removed. The drying process was carried out at the setting temperature of 100°C under the state that the agent was coated on the PET film to obtain the sheet having the average thickness of 220 µm.

### (1-8) Cutting process

The agent under the state of being coated on the PET film was cooled, and then, this was cut out to the A4 size (horizontal 210 mm x vertical 297 mm) to be used for the evaluation test.

### (2) Evaluation Test of the fire-extinguishing sheet

The fire-extinguishing sheet obtained in (1) was tested in the way as described below.

### (2-1) Placing of lithium ion battery cell

A 3Ah lithium ion battery cell having the size of horizontal 100 mm x vertical 100 mm x height 5 mm was placed in the center of a box-type container made of SUS 304 with the plate thickness of 1.2 mm having the size of horizontal 300 mm x vertical 300 mm x height 100 mm.

### (2-2) Bonding of the fire-extinguishing sheet

An acrylic plate having the size of horizontal 350 mm x vertical 350 mm x 10 mm with the plate thickness of 5 mm, having a hole with a diameter of 10 mm in the center thereof, was used as the top board of the box-type container in (2-1). In the center of one side of this acrylic plate, the fire-extinguishing sheet with the A4 size obtained in (1) was bonded by using a spray paste.

### (2-3) Fixing of the acrylic plate

The acrylic plate was fixed on the box-type container such that the side bonded with the fire-extinguishing sheet was down.

### (2-4) Nailing

An iron-made nail having a diameter of 5 mm was inserted into the opening of the acrylic top board at a constant rate to penetrate through the inner cell. At the moment of a short circuit, a flash was seen; but soon, a white smoke was generated from the fire-extinguishing sheet, so that the fire was extinguished without spreading.

### Comparative Example

In the evaluation test in (2), the evaluation test of the lithium ion battery cell using the nail was carried out in the way as described in (2-4) without bonding the fire-extinguishing sheet with the A4 size of (2-2) onto the acrylic top board. The lithium ion battery in the SUS-made container was explosively burned to cause a fire, which was spread in the entire container and continued for 5 minutes.

The representative embodiment of the present invention was described above, but the present invention is not limited to the above. Various modifications in the designing are possible, and these are also included in the present invention.

## Claims

1. A fire-extinguishing sheet comprising a fire-extinguishing agent which is capable of generating a fire-extinguishing component by thermal decomposition upon reaching a prescribed temperature.

2. The fire-extinguishing sheet according to claim 1, wherein the fire-extinguishing component is an aerosol.

3. The fire-extinguishing sheet according to claim 2, wherein the fire-extinguishing agent comprises at least a potassium compound and a binding agent.

4. The fire-extinguishing sheet according to claim 3, wherein the potassium compound comprises at least a potassium-containing organic compound and potassium chlorate.

5. The fire-extinguishing sheet according to claim 3, wherein the binding agent is one, or two or more selected from the group consisting of a polyester resin, polystyrene, a polyolefin resin, a polyurethane resin, polyisocyanate, a polyimide resin, an acrylic resin, a cellulose compound, vinyl chloride, an ethylene-vinyl acetate copolymer, a polyvinylidene fluoride resin, a fluorine resin binder, a synthetic latex, a rosin, an epoxy resin, a phenol resin, a polyvinyl alcohol resin, a polyvinyl acetal resin, an olefinic thermoplastic resin, a butadiene thermoplastic resin, a styrene thermoplastic resin, a styrene-butadiene thermoplastic resin, an isoprene thermoplastic resin, a urethane thermoplastic resin, an ester thermoplastic resin, an amide thermoplastic resin, a vinyl chloride thermoplastic resin, a thermoplastic resin formed of a mixture of a process oil, a tackifier resin, and the like, an alloy type thermoplastic elastomer, a dynamic crosslinkable thermoplastic elastomer, bentonite, and biobinder biopoly B.

6. The fire-extinguishing sheet according to claim 3, wherein the potassium compound comprises at least tripotassium citrate and potassium chlorate, and the binding agent comprises at least polyvinyl butyral.

7. A fire-extinguishing sheet for use with a lithium ion battery, which comprises the fire-extinguishing sheet according to any one of claims 1 to 6 and which is used in contact with or adjacent to the lithium ion battery.

8. The fire-extinguishing sheet for use with a lithium ion battery according to claim 7, wherein the sheet is used by bonding to the lithium ion battery.

9. The fire-extinguishing sheet for use with a lithium ion battery according to claim 7 or 8, wherein the lithium ion battery is mounted on a facility, an instrument, a machine, a tool, or a construction structure.

10. A facility, an instrument, a machine, a tool, or a construction structure, comprising a lithium ion battery and the fire-extinguishing sheet according to any one of claims 1 to 6 which is in contact with or adjacent to the lithium ion battery.

11. Use of the fire-extinguishing sheet according to any one of claims 1 to 6, for extinguishing or suppressing a fire of a lithium ion battery.

12. A method for extinguishing or suppressing a fire of a lithium ion battery, comprising the step of putting the fire-extinguishing sheet according to any one of claims 1 to 6 in contact with or adjacent to the lithium ion battery.

13. The method according to claim 12, wherein the lithium ion battery is mounted on a facility, an instrument, a machine, a tool, or a construction structure.
